# EUROPEAN PATENT APPLICATION

(11) **EP 3 872 592 A1**
(43) Date of publication of application: **01.09.2021**
(21) Application number: 21157172.4
(22) Date of filing: 15.02.2021
(51) Int. Cl.: G05B 19/418, G06F 30/15, G06F 30/18, B60R 16/02, G06F 113/16

(54) **WIRE HARNESS DESIGNING DEVICE AND DESIGNING METHOD**

(30) Priority: 25.02.2020 JP 2020029818; 28.02.2020 JP 2020034256
(71) Applicant: Hitachi Metals, Ltd., Minato-ku Tokyo 108-8224 (JP)
(72) Inventor: KAWASE, Kenji, Tokyo, 108-8224 (JP); HAYASHI, Shinya, Tokyo, 108-8224 (JP); SAKAGUCHI, Hiroshi, Tokyo, 108-8224 (JP)
(74) Representative: Betten & Resch

(57) **Abstract**

A wire harness designing device includes a track record database including structure data for existing wire harnesses, and configured to identify a total production or wiring time of each existing wire harness, and a structure of each sub harness resulting from dividing the wire harness, an input section configured to receive specification data including structure data for the wire harness to be designed on the basis of a wiring layout, an extraction section configured to look up the track record database on the basis of the structure data input in the input section, and extract the existing wire harnesses being close in structure to the wire harness to be designed, and a presentation section configured to present the existing wire harnesses extracted by the extraction section in order of the total production or wiring times of the existing wire harnesses, and configured to present the structures of the sub harnesses.

## Description

### Cross-Reference to Related Applications

The present application is based on Japanese patent application No. 2020-029818 filed on February 25, 2020 and Japanese patent application No. 2020-034256 filed on February 28, 2020**,** the entire contents of which are incorporated herein by reference.

### BACKGROUND OF THE INVENTION

### 1. FIELD OF THE INVENTION

The present invention relates to a wire harness designing device and a wire harness designing method.

### 2. DESCRIPTION OF THE RELATED ART

A wire harness being used in a vehicle such as a train vehicle, an automobile vehicle, or the like is constructed by bundling a plurality of electric wires, more specifically, a plurality of types of and/or a number of electric wires (signal wires and/or power wires) together. Further, for a design of the wire harness, the design thereof is made in such a manner that, in a wiring layout for each electric wire to be determined on three-dimensional data of a pre-designed vehicle and the like, a plurality of the electric wires for which the wiring paths are common are bundled together to thereby together constitute one wire harness.

Note that there is JP2012-1640887A as prior art reference information related to the invention of this application. JP2012-1640887A discloses a method for creating a two-dimensional drawing of the wire harness from the three-dimensional data of the wire harness.

[Patent Document **1**] JP2012-1640887A

### SUMMARY OF THE INVENTION

In the wiring layout for each electric wire within a vehicle main body, when all of the plurality of the electric wires for which the wiring paths are common have been bundled together to form one bundle thereof, the number of branching portions thereof has become large, leading to the complexity of the structure of the wire harness. There has been concern that the above complexity of the structure of the wire harness may cause the time taken to produce the wire harness to be long, leading to the producing cost therefor becoming high.

On the other hand, since the wiring of each electric wire can be conducted within the vehicle main body at one time, it seems that the efficiency for wiring each electric wire to the vehicle main body becomes high. However, when the number of electric wires used has been large and the lengths of the electric wires used have been long as in the wire harness being used in a train vehicle, making the number of electric wires to be bundled together too large has caused the wire harness to become too heavy, leading to the efficiency for wiring each electric wire to the vehicle main body becoming low.

In view of the above, in order to solve these problems, a method of dividing one wire harness into a plurality of sub harnesses (that is, dividing the electric wires for which the wiring paths are common into a plurality of bundles to constitute a plurality of sub harnesses) has been considered, but since the design with respect to the division into the plurality of sub harnesses has been one made empirically by its designer, no efficient design of the wire harness lowered in the producing cost therefor has been able to be made.

The present invention is one made in light of the above circumstances, and it is an object of the present invention to provide a wire harness designing device and a wire harness designing method, which are configured to be able to shorten an amount of time from wire harness production until wire harness wiring.

For the purpose of solving the above described problems, the present invention provides a wire harness designing device, which is used to make a design of a wire harness with a plurality of electric wires bundled together on the basis of a wiring layout for the plurality of electric wires, the device comprising: a track record database including structure data for existing wire harnesses, and configured to be able to identify at least a total time of production of each of the existing wire harnesses or a total time of wiring of each of the existing wire harnesses, and a structure of each of sub harnesses resulting from dividing the wire harness; an input section configured to be fed with specification data including structure data for the wire harness to be designed on the basis of the wiring layout for the plurality of electric wires; an extraction section configured to look up the track record database on the basis of the structure data input in the input section, and extract the existing wire harnesses each having a structure close to a structure of the wire harness to be designed; and a presentation section configured to be able to present the existing wire harnesses extracted by the extraction section in an order of the respective total times of production of the existing wire harnesses, or in an order of the respective total times of wiring of the existing wire harnesses, and configured to be able to present the structures of the sub harnesses.

In addition, for the purpose of solving the above described problems, the present invention also provides a wire harness designing method, which is used to make a design of a wire harness with a plurality of electric wires bundled together on the basis of a wiring layout for the plurality of electric wires, the method comprising: preparing a track record database including structure data for existing wire harnesses, and configured to be able to identify at least a total time of production of each of the existing wire harnesses or a total time of wiring of each of the existing wire harnesses, and a structure of each of sub harnesses resulting from dividing the wire harness; inputting specification data including structure data for the wire harness to be designed to an input section on the basis of the wiring layout for the plurality of electric wires; looking up the track record database on the basis of the structure data input in the input section, and extracting the existing wire harnesses each having a structure close to a structure of the wire harness to be designed; and presenting the extracted existing wire harnesses in an order of the respective total times of production of the existing wire harnesses, or in an order of the respective total times of wiring of the existing wire harnesses, and making it possible to present the structures of the sub harnesses.

### [Points of the invention]

According to the present invention, it is possible to provide the wire harness designing device and the wire harness designing method, which are configured to be able to shorten an amount of time from wire harness production until wire harness wiring.

### BRIEF DESCRIPTION OF THE DRAWINGS

Next, the embodiment of the present invention will be described in accordance with appended drawings:
FIG. 1 is a schematic configuration diagram showing a production system including a wire harness designing device according to one embodiment of the present invention;
**FIG. 2** is a diagram showing one example of a wire harness producing device;
**FIG. 3**A shows a display example on display devices in the wire harness producing device;

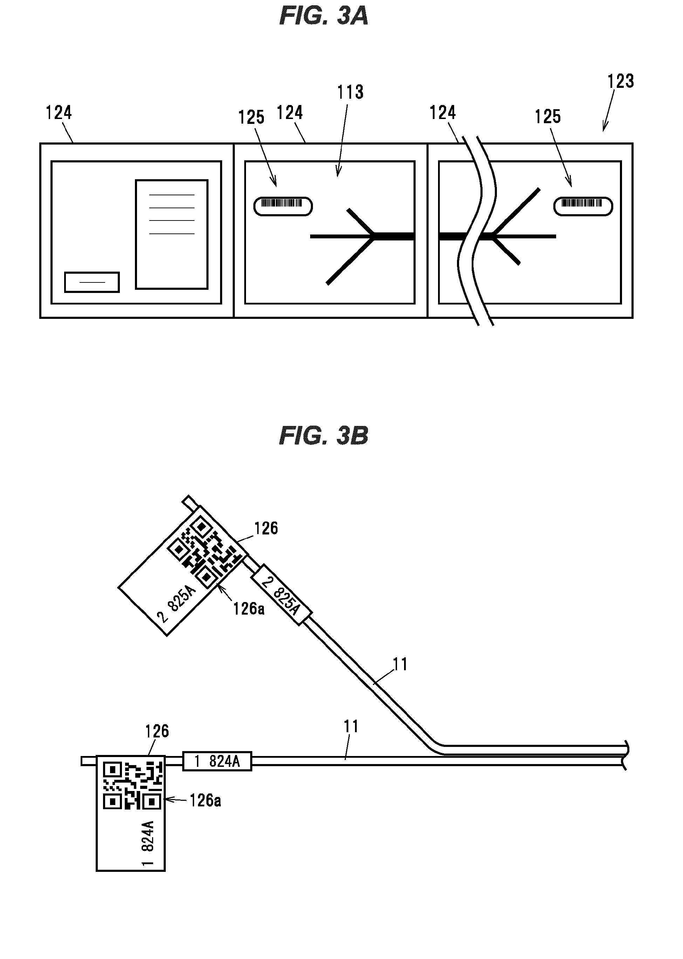

**FIG. 3**B is a diagram for explaining a mark tape;

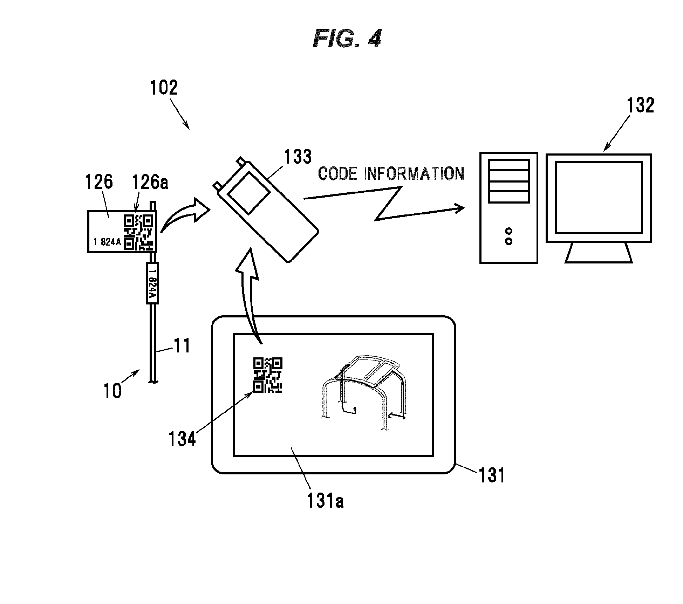

**FIG. 4** is a diagram showing one example of a wiring supporting device;

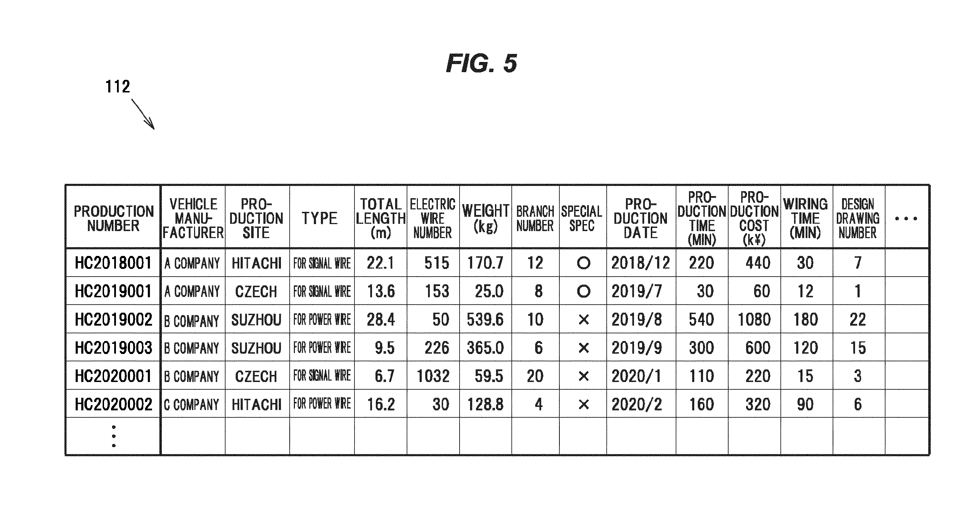

**FIG. 5** is a diagram showing one example of a track record database;

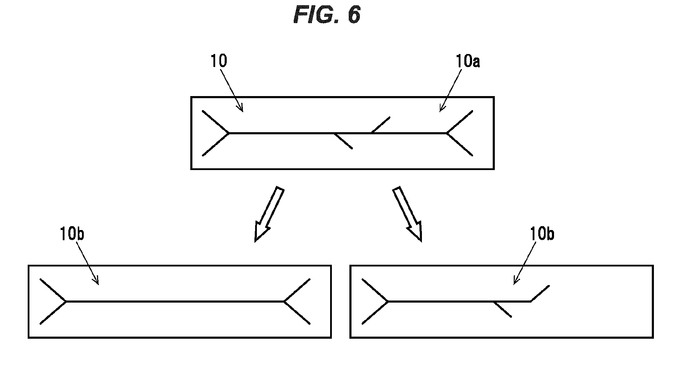

**FIG. 6** is a diagram for explaining a division of a main harness into sub harnesses;

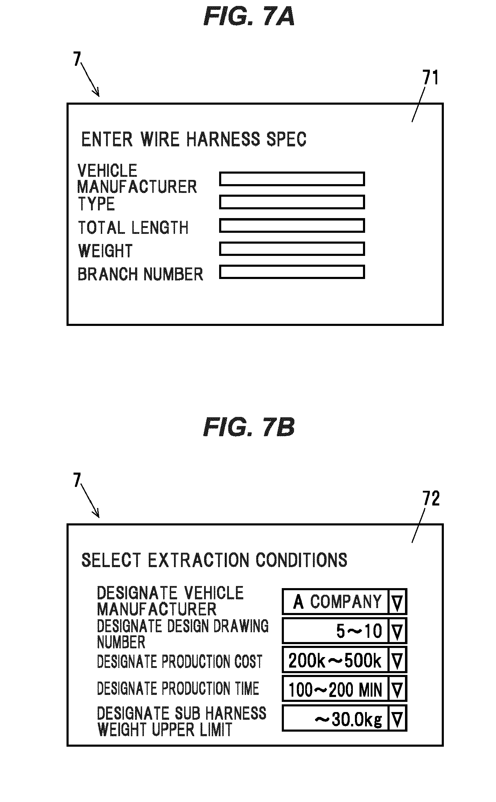

**FIG. 7A** is a diagram showing one example of an input screen;
**FIG. 7B** is a diagram showing one example of an extraction condition setting screen;

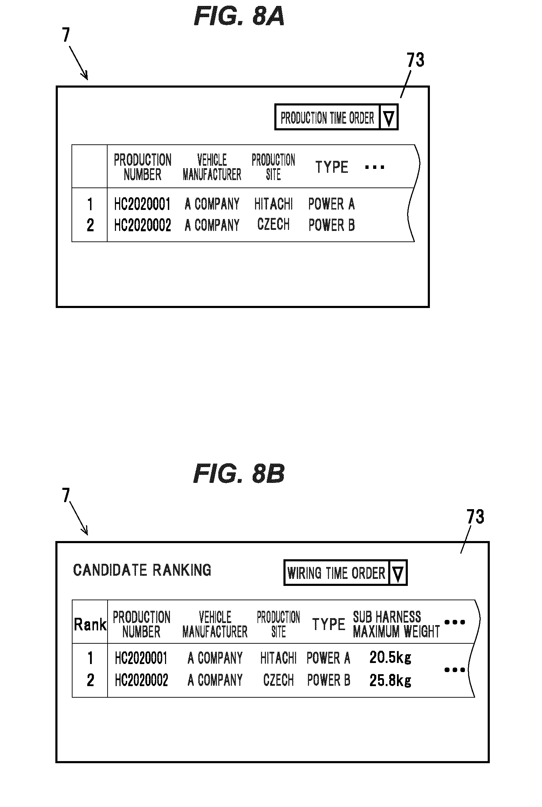

**FIG. 8A** is a diagram showing one example of a candidate presentation screen;
**FIG. 8B** is a diagram showing one example of a candidate presentation screen;

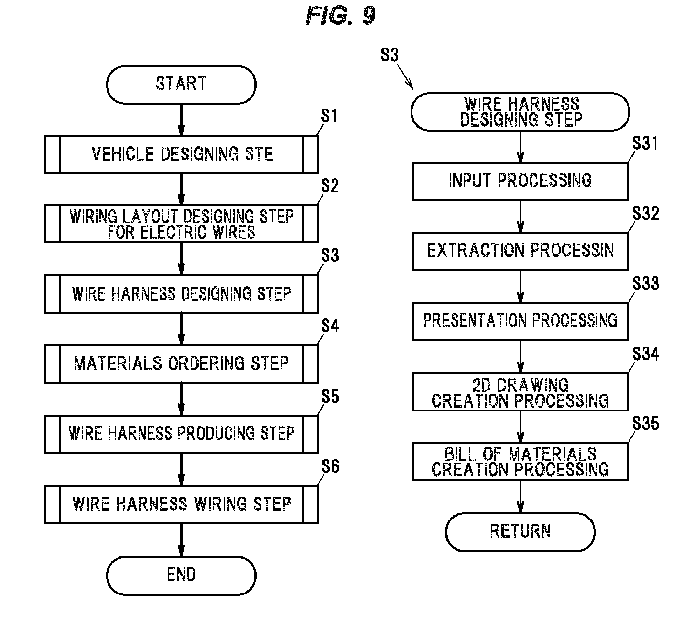

**FIG. 9A** is a flow diagram showing a flow from wire harness designing until wire harness wiring; and
**FIG. 9B** is a flow diagram showing a wire harness designing step.

### DETAILED DESCRIPTION OF THE PREFERRED EMBODIMENTS

### [Embodiment]

An embodiment of the present invention will be described below in conjunction with the accompanying drawings.

### (Overview of a production system 100)

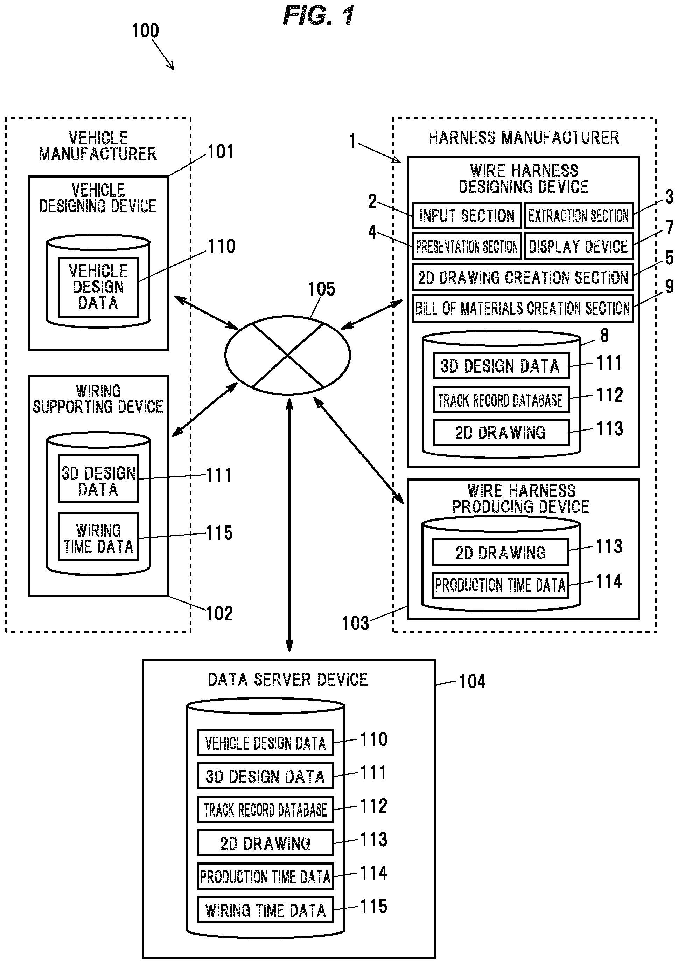

**FIG. 1** is a schematic configuration diagram showing a production system **100** including a wire harness designing device **1** according to the present embodiment. This production system **100** is a system configured to carry out design, production, and wiring support for a wire harness to be used in a vehicle, especially in a train vehicle. Note that the production system **100** is not limited to being used in the train vehicle, but that the production system **100** may be used in the other vehicle or moving vehicle such as an automobile vehicle or an aircraft vehicle or the like, or may be used in a system configured to carry out design, production, and wiring support for a wire harness to be wired within a building such as a house or a factory or the like, that is, may be used in a building.

The production system **100** is composed primarily of a vehicle designing device **101,** a wiring supporting device **102,** a wire harness designing device **1,** a wire harness producing device **103,** and a data server device **104,** and the vehicle designing device **101,** the wiring supporting device **102,** the wire harness designing device **1,** the wire harness producing device **103,** and the data server device **104** are each being configured to be able to communicate with each other via a network **105** such as the Internet or the like.

Further, the vehicle designing device **101** and the wiring supporting device **102** are provided within a vehicle manufacturer, while the wire harness designing device **1** and the wire harness producing device **103** are provided within a wire harness manufacturer (herein also referred to simply as the harness manufacturer).

Note that although in the present embodiment, a case where the number of vehicle manufacturers is one and the number of harness manufacturers is one is shown, the number of vehicle manufacturers and the number of harness manufacturers may each be configured in such a manner as to be plural. Further, when a plurality of vehicle manufacturers or a plurality of harness manufacturers are connected to the data server device **104,** the data server device **104** may be configured in such a manner that accessible regions are determined for each of the plurality of vehicle manufacturers or each of the plurality of harness manufacturers. For example, the data server device **104** may be configured in such a manner that the accessible regions are determined on the basis of authentication information assigned to each of the plurality of vehicle manufacturers or each of the plurality of harness manufacturers. Further, the production system **100** may be configured in such a manner as to be provided with a plurality of the data server devices **104.**

### (Overview of the vehicle designing device 101)

The vehicle designing device **101** is a device configured to make a design of the train vehicle (more specifically, its vehicle main body), and is constructed of a computer configured to be able to create three-dimensional vehicle design data **110** with a three-dimensional CAD, for example, and store it in that computer.

Further, the vehicle designing device **101** is configured to transmit the vehicle design data **110** created by that vehicle designing device **101** to the data server device **104** via the network **105.** The data server device **104** is configured to store received three-dimensional design data **111.**

Note that although in the present embodiment, the vehicle design data **110** created by the vehicle designing device **101** is configured as the three-dimensional data created with the three-dimensional CAD, the vehicle design data **110** is not limited to the above three-dimensional data, but may be configured as two-dimensional data created with a two-dimensional CAD.

### (Overview of the wire harness designing device 1)

The wire harness designing device **1** according to the present embodiment is a device configured to make a design of the wire harness, and is configured to first design a wiring layout for a plurality of types of and/or a number of electric wires (signal wires and/or power wires) to be wired within the vehicle main body on the basis of the vehicle design data **110** created by the previously described vehicle designing device **101,** to create the three-dimensional design data **(3D** design data) **111** resulting from adding the above designed wiring layout for those electric wires to the vehicle design data **110.** The wire harness designing device **1** is configured to next make a design of the wire harness on the basis of the above designed wiring layout (the three-dimensional design data **111)** within the vehicle main body.

Further, the wire harness designing device **1** is also configured to be able to create each electric wire information for each electric wire (including, for example, each connection destination information for identifying a connection destination (or a connection destination device) for each electric wire, each model number information for identifying a model number of each electric wire, each intended use information for identifying an intended use (use as a signal wire or use as a power wire) of each electric wire, and each length information for identifying a length of each electric wire).

Further, structure data and the like for the wire harness to be designed, whose details will be described later, are input to the wire harness designing device **1.** The wire harness designing device **1** is configured to create a two-dimensional drawing **(2D** drawing) **113** of the wire harness (or to support the creation of the two-dimensional drawing **113)** on the basis of the input structure data and the like for the wire harness and a track record database (track record DB) **112** including a database of past production track records. Note that the details of the wire harness designing device **1** will be described later.

The wire harness designing device **1** is configured to retrieve the vehicle design data **110** and the track record database **112** from the data server device **104** via the network **105.** Further, the wire harness designing device **1** is configured to transmit the created three-dimensional design data **111** and the created two-dimensional drawing **113** to the data server device **104.** The data server device **104** is configured to store the received three-dimensional design data **111** and the received two-dimensional drawing **113** in that data server device **104.** The stored two-dimensional drawing **113** is treated as the two-dimensional drawing **113** representing a structure of an existing sub harness, and will be exploited in the subsequent design of the wire harness.

Note that although in the present embodiment, the design of the wiring layout for each electric wire within the vehicle main body is made by the wire harness designing device **1,** making the design of the wiring layout for each electric wire within the vehicle main body is not limited to the foregoing, but that the design of the wiring layout for each electric wire within the vehicle main body may be made by the vehicle designing device **101.** In this case, the production system **100** may be configured in such a manner that the wiring layout for each electric wire is included in the vehicle design data **110** created by the vehicle designing device **101.**

Further, when the vehicle designing device **101** is configured to create the two-dimensional vehicle design data **110** with the two-dimensional CAD instead of creating the three-dimensional vehicle design data **110** as in the present embodiment, the wiring layout for a plurality of types of and/or a number of electric wires (signal wires and/or power wires) to be wired within the vehicle main body may be designed on the basis of the above created two-dimensional vehicle design data **110.**

### (Overview of the wire harness producing device 103)

The wire harness producing device **103** is a device configured to use the two-dimensional drawing **113** created by the wire harness designing device **1,** to in turn lay out the electric wires on the two-dimensional drawing **113** to produce the wire harness. The wire harness producing device **103** is configured to retrieve the two-dimensional drawing **113** from the data server device **104** via the network **105.**

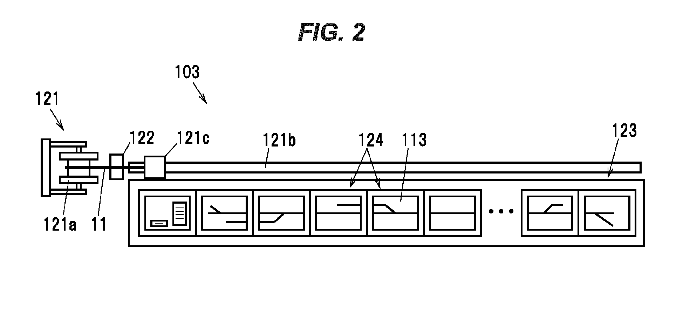

As shown in **FIG. 2****,** the wire harness producing device **103** is configured in such a manner as to include an electric wire feeding device **121,** an electric wire cutting machine **122,** which is designed to cut an electric wire **11** fed from the electric wire feeding device **121,** and a work bench **123,** which is designed for a wire laying out operation for the electric wire **11** to be performed thereon. The electric wire feeding device **121** is configured in such a manner as to include a **reel 121a** with the electric wire **11** being wound therearound, and a transfer robot **121c,** which is designed to hold that electric wire **11** fed from the reel **121a,** run on a rail **121b,** and transfer (pull out) that electric wire **11.** The electric wire cutting machine **122** is configured to use a built-in cutting blade (not shown), to cut that electric wire **11** pulled out by the transfer robot **121c.**

The work bench **123** is constructed, for example by arranging a plurality of display devices **124** such as liquid crystal displays or the like end to end in one row which are configured to display the two-dimensional drawing **113** in a full-scale size. Herein, a case where the two-dimensional drawing **113** created by the wire harness designing device 1 is displayed on the plurality of display devices **124** is shown, but the wire harness producing device **103** may be configured in such a manner that a dedicated drawing to be displayed on the plurality of display devices **124,** that is, a wire laying out drawing is separately created and displayed on the plurality of display devices **124.**

The wire harness is produced by in turn laying out the electric wires **11** on the work bench **123,** providing an identification label and the like on each of the electric wires **11,** making a continuity check on each of the electric wires **11,** providing a protective material, and carrying out an inspection. Note that the way to produce the wire harness is not limited to the foregoing, but that the wire harness may be produced, for example by printing the two-dimensional drawing **113** in a full-scale size, and in turn laying out the electric wires **11** on the printed two-dimensional drawing **113.**

Further, the wire harness producing device **103** is configured to be able to retrieve a time taken to produce each wire harness. The wire harness producing device **103** is configured to be able to retrieve the time taken to produce each wire harness from, for example, production time data **114** at the time of producing each wire harness. For example, an amount of time from a time at which the electric wire **11** to be first laid out has been fed out until a finish time of the final step (for example, the wire harness inspection step) in the wire harness production can be set as the wire harness production time.

As shown in **FIG. 3A****,** in the present embodiment, the wire harness producing device **103** is configured to in turn display bar codes **125** indicating identification codes for the electric wires **11** on the plurality of display devices **124** in accordance with the wire laying out order of the electric wires **11.** The bar codes **125** are displayed adjacent to the end portions of the electric wires **11** to be laid out, and are displayed in such a manner as to overlap on the two-dimensional drawing **113.** Further, as shown in **FIG. 3B****,** the wire harness producing device **103** is configured to create mark tapes **126** having respective two-dimensional codes **126a** indicating the identification codes for the electric wires **11** to be laid out being printed thereon by a printer (not shown). After laying out the electric wires **11** on the two-dimensional drawing **113,** an operator attaches the mark tapes **126** to the end portions of the electric wires **11** and reads in the two-dimensional codes **126a** and the bar codes **125** with a code reader (not shown). The wire harness producing device **103** is configured to store a time at which the bar codes **125** have been read in, when it is determined that the code information in the two-dimensional codes **126a** on the mark tapes **126** and the code information in the bar codes **125** on the plurality of display devices **124** are matching each other. By repeating the above operation, each wire harness is produced, while at the same time the production time data **114** associated with the time taken to produce each wire harness is retrieved.

The wire harness producing device **103** is configured to store the production time data **114** retrieved in that wire harness producing device **103,** within that wire harness producing device **103,** while at the same time transmitting the production time data **114** to the data server device **104** via the network **105.** The data server device **104** is configured to store the received production time data **114.** In addition, the data server device **104** is configured to add (consolidate) the received production time data **114** to the track record database **112.**

### (Overview of the wiring supporting device 102)

The wiring supporting device **102** is a device configured to support the wiring operation at the time of wiring the wire harness to the train vehicle. The wiring supporting device **102** is configured in such a manner as to have, for example, a mobile terminal such as a tablet or the like configured to be able to be carried by the operator who performs the wiring operation.

The wiring supporting device **102** is configured to receive, for example, the three-dimensional design data **111** from the data server device **104** via the network **105,** and display a wiring path for the wire harness, the respective connection destination for each of the electric wires **11,** and the like in a wiring order.

The wiring supporting device **102** is configured to be able to retrieve a time (a wiring time) taken to wire each wire harness. The wiring supporting device **102** is configured to be able to retrieve the wiring time for each wire harness from, for example, wiring time data **115.** For example, the wiring supporting device **102** can also be configured to, each time the electric wires **11** are connected, carry out a confirmation operation such as pressing a confirmation button, or reading in the codes assigned to the electric wires **11,** or the like, to retrieve the wiring time for each wire harness from the wiring time data **115** in which a confirmation operation time has been stored.

As shown in **FIG. 4****,** in the present embodiment, the wiring supporting device **102** is configured in such a manner as to include a work terminal **131** having a display device **131a,** and an administrating terminal **132,** which is provided separately from the work terminal **131.** The wiring supporting device **102** is configured to display the respective wiring path for each of the electric wires **11** on the display device **131a** of the work terminal **131** in accordance with a preset wiring operation order. Further, the wiring supporting device **102** is configured to display two-dimensional codes **134** for the electric wires **11** on which the wiring operation is to be performed, on the display device **131a** of the work terminal **131.** At the time of the wiring operation, the operator uses a code reader **133** to read in the two-dimensional codes **134** displayed on the display device **131a** of the work terminal **131** and the two-dimensional codes **126a** on the mark tapes **126** attached to the electric wires **11,** to carry out collation for the electric wires **11** to be wired. The code information in the read in two-dimensional codes **134** and the code information in the read in two-dimensional codes **126a** are transmitted to the administrating terminal **132,** and a time at which the two-dimensional codes **134** and the two-dimensional codes **126a** have been read in is stored in the administrating terminal **132.** By repeating the above operation, the wiring operation for each wire harness is performed, while at the same time the wiring time data **115** associated with the time taken to wire each wire harness is created.

The wiring supporting device **102** is configured to store the wiring time data **115** retrieved in that wiring supporting device **102,** within that wiring supporting device **102,** while at the same time transmitting the wiring time data **115** to the data server device **104** via the network **105.** The data server device **104** is configured to store the received wiring time data **115.** Further, the data server device **104** is configured to add (consolidate) the received wiring time data **115** to the track record database **112.**

Note that the configuration of the production system **100** shown in **FIG. 1** is merely one example, and that for example, the production system **100** may be configured in such a manner that the wire harness designing device **1** and the wire harness producing device **103** belong to the vehicle manufacturer. Further, the production system **100** may be configured in such a manner that the vehicle designing device **101** belongs to a design company outside the vehicle manufacturer, while the wiring supporting device **102** belongs to a construction company that is entrusted with the wiring operation outside the vehicle manufacturer.

### (Details of the wire harness designing device 1)

Next, the details of the wire harness designing device **1** according to the present embodiment will be described. The wire harness designing device **1** is configured in such a manner as to include an input section **2,** an extraction section **3,** a presentation section **4,** a two-dimensional drawing creation section **5,** and a bill of materials creation section **9.** The input section **2,** the extraction section **3,** the presentation section **4,** the two-dimensional drawing creation section **5,** and the bill of materials creation section **9** are each being configured as an appropriate combination of a computing element, a memory, a storage device, an interface, a software and the like. In the present embodiment, the wire harness designing device **1** is constructed of a personal computer, and is equipped with a display device **7** such as a liquid crystal display or the like.

First, the wire harness designing device **1** is configured to retrieve the vehicle design data **110** from the data server device **104** via the network **105.** The wire harness designing device **1** is configured to design (or support the design of) the wiring layout for a plurality of types of and/or a number of electric wires (signal wires and/or power wires) to be wired within the vehicle main body on the basis of the retrieved vehicle design data **110.** The wire harness designing device **1** is configured to create the three-dimensional design data (3D design data) **111** including the vehicle design data **110** and the wiring layout for the electric wires **11** with, for example, the three-dimensional CAD.

The wire harness designing device **1** is configured to store the three-dimensional design data **111** created by the wire harness designing device **1** in a storage section **8** of the wire harness designing device **1,** while at the same time transmitting the three-dimensional design data **111** to the data server device **104** via the network **105.** The data server device **104** is configured to store the received three-dimensional design data **111.**

Further, the wire harness designing device **1** is configured to retrieve the track record database **112** from the data server device **104** via the network **105.** The wire harness designing device **1** is configured to extract a plurality of existing wire harnesses each having a structure close to the structure of the wire harness **10** to be designed, on the basis of the retrieved track record database **112,** and cite them as the design of the wire harness to be designed.

**FIG. 5** is a diagram showing one example of the track record database **112.** As shown in **FIG. 5****,** the track record database **112** is a database in which production track records and wiring track records such as the structure data and the like on the existing wire harnesses produced in the past have been recorded. In the present embodiment, the track record database **112** is configured to include at least a total production time for each wire harness or a total wiring time for each wire harness.

More specifically, the track record database **112** is configured to include information for each wire harness, such as a production number, respective specification data (a vehicle manufacturer, a production site, respective structure data (a type, a total length, a number of electric wires, a weight, a number of branching portions, respective special specifications (presence / absence of protective material, presence / absence of shield, and the like), and the like)), a production date, a production time, a production cost, a wiring time, a number of design drawings, and the like. In addition, the track record database **112** is configured to include, for each wire harness, a wiring cost, a materials cost, a number of citations of the drawings, and the like, though they are not shown. Of the above examples of the information contained in the track record database **112,** the respective type of each wire harness indicates an intended use such as use as a power wire, use as a signal wire, use as an earth wire, or the like. The above production time for each wire harness is based on the production time data **114** retrieved in the wire harness producing device **103.** In addition, the above wiring time for each wire harness is based on the wiring time data **115** retrieved in the wiring supporting device **102.** The above producing cost for each wire harness is one calculated on the basis of the above production time for each wire harness, while the above wiring cost for each wire harness is one calculated on the basis of the above wiring time for each wire harness. The above number of citations of the drawings for each wire harness indicates the number of citations in the two-dimensional drawing creation section 5, which will be described later.

Here, the above number of design drawings for each wire harness will be explained. When all of a plurality of the electric wires for which the wiring paths are common have simply been bundled together to form one bundle thereof, the number of branching portions thereof has become large, leading to the complexity of the structure of the wire harness. There has been concern that the above complexity of the structure of the wire harness may cause the time taken to produce the wire harness to be long, leading to the producing cost therefor becoming high. Further, making the number of electric wires to be bundled together too large has caused the wire harness to become too heavy, also leading to concern that it may be time consuming to wire each electric wire.

In addition, due to the wire harness becoming too heavy, the efficiency for wiring each electric wire to the vehicle main body has become low, while the time for wiring each electric wire has become long. Further, making the number of electric wires to be bundled together too large has caused the number of branching portions thereof to become large, leading to concern that the structure of the wire harness may become complex. There has been concern that the above complexity of the structure of the wire harness may cause the time taken to produce the wire harness to be long, leading to the producing cost therefor becoming high.

In light of the foregoing, as shown in **FIG. 6****,** the wire harness **10** being large in the number of electric wires and the number of branching portions is divided into a plurality of wire harnesses **10.** Hereinafter, the wire harness **10** before the division will be referred to as the main harness **10a,** while the plurality of wire harnesses **10** after the division will be referred to as the sub harnesses **10**b. The above number of design drawings for each wire harness refers to the number of two-dimensional drawings **113** for the sub harnesses **10**b, that is, the number of sub harnesses **10b** together constituting each main harness **10a.**

Note that in **FIG. 5** described above, for each main harness **10a,** there are shown the respective variety of types of information as one example. The production time for the main harness **10a** refers to the total production time resulting from summing the respective production times of the sub harnesses **10b** associated with the main harness **10a.** Likewise, the wiring time for the main harness **10a** refers to the total wiring time resulting from summing the respective wiring times of the sub harnesses **10b** associated with the main harness **10**a.

Further, the track record database **112** is configured to be able to identify the respective structure of each of the sub harnesses **10**b. More specifically, in the present embodiment, the track record database **112** is configured to be able to identify the respective two-dimensional drawings **113** of the sub harnesses **10**b. The track record database **112** is configured to include, for example, links, file names, and the like in the track record database **112** to be able to identify the respective two-dimensional drawing **113** of each of the sub harnesses **10**b. The wire harness designing device **1** is configured to retrieve the respective two-dimensional drawings **113** of the sub harnesses **10b** from the data server device **104** via the network **105** on the basis of the links, the file names, and the like being able to identify the respective two-dimensional drawing **113** of each of the sub harnesses **10**b. It should be noted, however, that the above configuration of the wire harness designing device **1** is not limited to the foregoing, but that the wire harness designing device **1** may be configured in such a manner that the respective two-dimensional drawing **113** of each of the sub harnesses **10b** is included (embedded) in the track record database **112** itself. Further, it is more desirable that the track record database **112** is configured to include, for each of the sub harnesses **10b** as well as the main harness **10a,** a variety of types of information, such as respective structure data such as a type, a total length, a weight, a number of branching portions, respective special specifications and the like, a production time, a wiring time and the like.

The wire harness designing device **1** is configured in such a manner that the specification data including the structure data and the like for the wire harness **10** (the main harness **10**a) to be designed is input to the input section **2** on the basis of the wiring layout (the preliminarily created three-dimensional design data **111**) for the electric wires **11.** As shown in **FIG. 7A****,** the input section **2** may be configured to display an input screen **71** for presenting input items on the display device **7.** In this case, the designer inputs the structure data and the like for the wire harness **10** (the main harness **10**a) manually with a keyboard and a mouse on the basis of the three-dimensional design data **111.** Note that the display device **7** is provided with a touch panel, so that the input section **2** may be configured in such a manner as to allow the structure data and the like for the wire harness **10** (the main harness **10**a) to be input thereto with the touch panel of the display device **7.** Each of the items input on the input screen **71** of the display device **7** is stored in the storage section **8.** In **FIG. 7A****,** as one example, there is shown a case where the vehicle manufacturer, the type, the total length, the weight, and the number of branching portions are to be input on the input screen **71** of the display device **7,** but the input items can be configured as appropriate.

Note that although in the present embodiment, the wire harness designing device **1** is configured in such a manner that the structure data and the like for the wire harness **10** and the like are manually input on the input screen **71** of the display device **7,** the configuration of the wire harness designing device **1** is not limited to the foregoing, but that the wire harness designing device **1** may be configured in such a manner that the three-dimensional design data **111** (or separately created electric wire information) is input directly to the input section **2,** to extract the structure data and the like for the wire harness **10** (the main harness **10**a) to be designed from the input three-dimensional design data **111** (or the separately created electric wire information). Note that the design data to be input to the input section **2** may be two-dimensional. Since this saves the time to manually input the structure data and the like for the wire harness **10** (the main harness **10**a), it is possible to efficiently carry out the designing operation for the wire harness **10** (the main harness **10**a).

The extraction section **3** is configured to look up the track record database **112** on the basis of the structure data and the like input in the input section 2, and extract a plurality of existing wire harnesses 10 (existing main harnesses **10**a) whose structures are close to (or match) the structure of the wire harness 10 (the main harness **10**a) to be designed. As shown in FIG. 7B, in the present embodiment, the extraction section 3 is configured to display an extraction condition setting screen 72 for setting the extraction conditions on the display device 7, and extract a plurality of existing wire harnesses 10 (main harnesses **10**a) that satisfy the extraction conditions set on the extraction condition setting screen 72, and which are close to (or match) the structure data input in the input section 2. For example, the extraction section 3 is configured to extract a plurality of wire harness information, which are able to identify the existing wire harnesses 10 (the main harnesses **10**a), including information such as respective production numbers, respective specification data (respective vehicle manufacturers, respective production sites, respective structure data (respective types, respective total lengths, the respective numbers of electric wires, respective weights, the respective numbers of branching portions, respective special specifications (presence / absence of protective material, presence / absence of shield, and the like) and the like), respective production dates, respective production times, respective production costs, respective wiring times, the respective numbers of design drawings, and the like.

In the present embodiment, the extraction section 3 is configured to be able to set an upper limit value for the weights of the sub harnesses 10b as one of the extraction conditions. This makes it possible to easily pick up the wire harness 10 (the main harness **10**a) being constituted by the sub harnesses 10b whose weights allow the wiring operation for the wire harness 10 (the main harness 10a) to be efficiently carried out.

Further, in the present embodiment, the extraction section 3 is configured to be able to set an upper limit value for the total production time for each wire harness 10 (each main harness 10a) as one of the extraction conditions. This is because, for example, when the structures of the sub harnesses 10b become too complex (for example, the number of branching portions is too large), even if the wiring operation is carried out efficiently, it is too time consuming to produce the wire harness 10, leading to concern that the producing cost may become excessive. By setting the upper limit value for the total production time at the time of extraction, it is possible to easily pick up the wire harness 10 (the main harness **10**a) with the lowered producing cost for the wire harness 10 and with the improved operation efficiency of the wiring operation for the wire harness 10. In FIG. 7B, there is shown a case where the upper limit value and the lower limit value for the production time can be set as the extraction conditions, but only the upper limit value for the production time may be set.

In FIG. 7B, as one example, there is shown a case where the vehicle manufacturer, the number of design drawings, the producing cost, the production time, and the upper limit value for the weights of the sub harnesses 10b are to be set as the extraction conditions, but the extraction conditions can be set as appropriate. Further, herein, the extraction section 3 is configured to be able to set the extraction conditions, but the extraction section 3 may be configured to extract the existing wire harness 10 (the existing main harness **10**a) close to the structure data and the like input in the input section 2 without setting the extraction conditions. Further, although in the present embodiment, the extraction target is limited to the main harness 10a, the extraction target is not limited to the same main harness **10**a, but the sub harnesses **10**b together constituting the same main harness 10a may also be included in the extraction target.

At the time of the extraction in the extraction section 3, a known extraction technique (or search technique) may be used, to make a comparison between the structure data and the like input in the input section 2 and the structure data and the like for the existing wire harnesses 10 registered in the track record database 112, and extract a plurality of existing wire harnesses 10 being high in the degree of matching between their structure data and the like and the structure data and the like input in the input section 2. The above degree of matching that determines the presence or absence of the extraction is not particularly limited, but can be set as appropriate. Further, the extraction section 3 may be configured to be able to set a weighting at the time of the extraction on the extraction condition setting screen 72, such as a preferential extraction of a plurality of existing wire harnesses 10 being high in the degree of matching in the number of branching portions, or the like. The results of the extraction in the extraction section 3 are stored in the storage section 8.

The presentation section 4 may be configured to be able to present the plurality of existing wire harnesses 10 extracted by the extraction section 3 in an order of the production times (in an order of the total production times). For example, as shown in FIG. 8A, the presentation section 4 may be configured to sort the plurality of existing wire harnesses 10 extracted by the extraction section 3 and stored in the storage section 8 in an order of the production times for the plurality of existing wire harnesses 10 (in such an ascending order for the production times that the existing wire harness 10 is shorter in the production time than the one after it), and display a candidate presentation screen 73 in the form of a ranking on the display device 7. This makes it possible to easily pick up the plurality of existing wire harnesses 10 that are close in structure to the wire harness 10 to be designed and short in the total production time. For example, the presentation section 4 is configured to present the plurality of wire harness information, which are able to identify the plurality of existing wire harnesses 10 extracted by the extraction section 3, in an order of the production times (in an order of the total production times), including the information such as the respective production numbers, the respective specification data (respective vehicle manufacturers, the respective production sites, the respective structure data (the respective types, the respective total lengths, the respective numbers of electric wires, the respective weights, the respective numbers of branching portions, the respective special specifications (presence / absence of protective material, presence / absence of shield, and the like) and the like), the respective production dates, the respective production times, the respective production costs, the respective wiring times, the respective numbers of design drawings, and the like.

In the present embodiment, the presentation section 4 is configured to be able to present at least the weight (the maximum sub harness weight) of the heaviest sub harnesses **10**b. This makes it easier for the designer to select the wire harnesses 10 allowing for the weight of the heaviest sub harnesses **10**b, and allows an enhancement in convenience at the time of design.

Further, the presentation section 4 is configured to select any wire harness 10 displayed on the candidate presentation screen 73 of the display device 7, and thereby be able to present the structures of the sub harnesses 10b in the selected wire harness 10. In the present embodiment, the presentation section 4 is configured to be able to present the respective two-dimensional drawings 113 of the sub harnesses 10b in the wire harness 10 selected on the candidate presentation screen 73 of the display device 7. For example, by clicking with the mouse (or touching with the touch panel) any wire harness 10 on the candidate presentation screen 73 of the display device 7, the respective two-dimensional drawings 113 of the sub harnesses **10**b constituting the wire harness 10 are displayed on the display device 7.

As a result, it is possible to easily know combinations of the sub harnesses **10**b that shorten the total production time for the wire harness 10, and it is therefore possible to lower the producing cost for the wire harness 10 and simplify the designing operation for the wire harness 10.

Herein, a case where the plurality of existing wire harnesses 10 extracted by the extraction section 3 are presented in an order of the production times (in an order of the total production times) has been described, but for example, when the number of sub harnesses 10b is made large, although the production time can be shortened, a problem with it being very time consuming to in practice wire the sub harnesses 10b to the train vehicle can occur. In light of the foregoing, the presentation section 4 may be configured to be able to present the plurality of existing wire harnesses 10 extracted by the extraction section 3 in an order of total times of the production times and the wiring times for the plurality of existing wire harnesses 10. In order to make versatility high, it can be the that it is more preferable to make it possible to select a sorting condition, such as sorting in an order of the production times, or sorting in an order of the total times of the production times and the wiring times, on the candidate presentation screen 73 of the display device 7. In the present embodiment, the sorting conditions are configured to be able to be selected with the mouse or the touch panel from a pull-down menu on the upper right of the candidate presentation screen 73 of the display device 7 (see FIG. 8A). Note that the sorting conditions may be configured as sorting in an order of the production costs, sorting in an order of the wiring costs, and sorting in an order of the total costs of the producing costs and the wiring costs. Note that the sorting conditions are predetermined and that the sorting conditions may not be able to be selected.

The presentation section 4 may be configured to be able to present the plurality of existing wire harnesses 10 extracted by the extraction section 3 in an order of the wiring times (in an order of the total wiring times). For example, as shown in FIG. 8B, the presentation section 4 may be configured to sort the plurality of existing wire harnesses 10 extracted by the extraction section 3 and stored in the storage section 8 in an order of the wiring times for the plurality of existing wire harnesses 10 (in such an ascending order for the wiring times that the existing wire harness 10 is shorter in the wiring time than the one after it), and display the candidate presentation screen 73 in the form of a ranking on the display device 7. This makes it possible to easily pick up the plurality of existing wire harnesses 10 that are close in structure to the wire harness 10 to be designed and short in the total wiring time. For example, the presentation section 4 is configured to present the plurality of wire harness information, which are able to identify the plurality of existing wire harnesses 10 extracted by the extraction section 3, in an order of the wiring times (in an order of the total wiring times), including the information such as the respective production numbers, the respective specification data (respective vehicle manufacturers, the respective production sites, the respective structure data (the respective types, the respective total lengths, the respective numbers of electric wires, the respective weights, the respective numbers of branching portions, the respective special specifications (presence / absence of protective material, presence / absence of shield, and the like) and the like), the respective production dates, the respective production times, the respective production costs, the respective wiring times, the respective numbers of design drawings, and the like.

As a result, it is possible to easily know combinations of the sub harnesses 10b that shorten the total wiring time for the wire harness 10, and it is therefore possible to lower the producing cost for the wire harness 10 and simplify the designing operation for the wire harness 10.

Herein, a case where the plurality of existing wire harnesses 10 extracted by the extraction section 3 are presented in an order of the wiring times (in an order of the total wiring times) has been described, but as described above, when the structures of the sub harnesses 10b are made too complex, a problem with it being very time consuming to produce the sub harnesses 10b can occur. In light of the foregoing, the presentation section 4 may be configured to be able to present the plurality of existing wire harnesses 10 extracted by the extraction section 3 in an order of the total times of the production times and the wiring times for the plurality of existing wire harnesses 10. In order to make versatility high, it can be the that it is more preferable to make it possible to select a sorting condition, such as sorting in an order of the wiring times, or sorting in an order of the total times of the production times and the wiring times, on the candidate presentation screen 73 of the display device 7. In the present embodiment, the sorting conditions are configured to be able to be selected with the mouse or the touch panel from a pull-down menu on the upper right of the candidate presentation screen 73 of the display device 7 (see FIG. 8B). Note that the sorting conditions may be configured as sorting in an order of the production costs, sorting in an order of the wiring costs, and sorting in an order of the total costs of the producing costs and the wiring costs. Note that the sorting conditions are predetermined and that the sorting conditions may not be able to be selected.

The two-dimensional drawing creation section 5 is configured to create the respective two-dimensional drawings 113 of the sub harnesses 10b for the existing wire harness 10 to be designed, on the basis of the structure data for the wire harness 10 to be designed input in the input section 2 and the structure data for the sub harnesses 10b in the existing wire harness 10 presented and selected in the presentation section 4. Since the information such as the length, the connection destination, and the branching location and the like of each of the electric wires 11 are required to create the respective two-dimensional drawings 113 of the sub harnesses 10b for the existing wire harness 10 to be designed, the above information may be input from the input section 2, or be imported from the three-dimensional design data 111. The two-dimensional drawing creation section 5 is configured to create respective two-dimensional drawings 113 of the sub harnesses 10b for the wire harness 10 to be designed, on the basis of the above information and the respective two-dimensional drawings 113 of the selected existing sub harnesses **10**b. The created respective two-dimensional drawings 113 of the sub harnesses 10b for the wire harness 10 to be designed are stored in the storage section 8 while at the same time being transmitted to the data server device 104. The data server device 104 is configured to store the received respective two-dimensional drawings 113 of the sub harnesses 10b for the wire harness 10 to be designed. As a specific method for creating the respective two-dimensional drawings 113 of the sub harnesses 10b by exploiting the past drawings, the known method disclosed in JP**2012-1640887**A and the like described above may be used, and the detailed description thereof will be omitted herein.

Note that the two-dimensional drawing creation section 5 may not be configured to create the respective two-dimensional drawings 113 of the sub harnesses 10b completely automatically, but that the two-dimensional drawing creation section 5 may be configured in such a manner that, for example, the branching locations, the lengths and the like of the electric wires 11, can manually be adjusted. That is, the two-dimensional drawing creation section 5 may be configured to support the design of the sub harnesses 10b by the designer.

Further, in the present embodiment, the wire harness designing device 1 is configured in such a manner as to include the bill of materials creating section 9. The bill of materials creating section 9 is configured to list materials required to manufacture the wire harness 10 on the basis of the respective two-dimensional drawings 113 of the sub harnesses 10b created by the two-dimensional drawing creation section 5 and the electric wire information contained in the three-dimensional design data 111, and create a bill of materials (BOM). The created bill of materials is stored in the storage section 8. This bill of materials is exploited in an order processing at the time of wire harness production. The wire harness designing device 1 may be configured to transmit the created bill of materials to the data server device 104, and store it in the data server device 104. Note that although in the present embodiment, the wire harness designing device 1 is provided with the bill of materials creating section 9, the present invention is not limited to the foregoing, but the bill of materials creating section 9 may be provided in the wire harness producing device 103, or may be provided in the data server device 104.

### (Flow from the designing of the wire harness until the wiring of the wire harness)

**FIG. 9**A is a flow diagram showing a flow from the design of the wire harness to the wiring of the wire harness. As shown in **FIG.** 9A, first, a vehicle designing step is executed in step S1. In the vehicle designing step, with the vehicle designing device 101, the design of a train vehicle is made to create the vehicle design data 110. The created vehicle design data 110 is transmitted to the data server device 104 via the network 105 and is stored in the data server device 104.

After that, in step S2, a wiring layout designing step for electric wires is executed. In the wiring layout designing step for the electric wires, the wire harness designing device 1 retrieves the vehicle design data 110 from the data server device 104 via the network 105, and on the basis of the retrieved vehicle design data 110, the design of the wiring layout for the electric wires 11 is made to create three-dimensional design data 111. The created three-dimensional design data 111 is stored in the storage section 8 while being transmitted to the data server device 104 via the network 105 and stored in the data server device 104.

After that, in step S3, a wire harness designing step is executed. As shown in FIG. 9B, in the wire harness designing step, first, an input processing is carried out in step S31.

In the input processing, the structure data and the like for the wire harness 10 to be designed is input to the input section 2 on the basis of the three-dimensional design data 111 created in step S2. The input structure data and the like are stored in the storage section 8.

After that, an extraction processing is carried out in step S32. In the extraction processing, the extraction section 3 looks up the track record database 112 on the basis of the structure data input in step S21 and stored in the storage section 8, and extracts the plurality of existing wire harnesses 10 being close in structure to the wire harness 10 to be designed. The extraction results are stored in the storage section 8. Note that the track record database 112 is preliminarily retrieved from the data server device 104 via the network 105 and is stored in the storage section 8.

After that, a presentation processing is carried out in step S33. In the presentation processing, the presentation section 4 sorts the plurality of existing wire harnesses 10 extracted in step S32 and stored in the storage section 8, in an order of the production times for the plurality of existing wire harnesses 10, and displays them on the display device 7. Alternatively, the presenting section 4 may sort the plurality of existing wire harnesses 10 extracted in step S32 and stored in the storage section 8, in an order of the wiring times for the plurality of existing wire harnesses 10, and display them on the display device 7. At this point of time, in the present embodiment, the structures of the sub harnesses 10b in the plurality of extracted existing wire harnesses 10 can be presented as the two-dimensional drawings 113 or the like. The designer selects the appropriate wire harness 10 from the extracted existing wire harnesses 10 while looking up the presented two-dimensional drawings 113.

After that, a two-dimensional drawing creation processing is carried out in step S34. In the two-dimensional drawing creation processing, the respective two-dimensional drawings **113** of the sub harnesses **10b** for the existing wire harness **10** to be designed are created, on the basis of the structure data for the wire harness **10** to be designed input in step **S31** and the structure data for the sub harnesses **10b** in the existing wire harness **10** selected in step **S33.** The respective two-dimensional drawings **113** of the sub harnesses **10b** for the existing wire harness **10** to be designed are stored in the storage section **8** while being transmitted to the data server device **104.**

After that, a bill of materials creation processing is carried out in step **S35.** In the bill of materials creation processing, the bill of materials creation section **9** creates a bill of materials on the basis of the respective two-dimensional drawings **113** of the sub harnesses **10b** created in step **S24.** The created bill of materials is stored in the storage section **8.**

After that, the flow returns, and each material ordering step in step **S4** in **FIG. 9A** is executed. In the materials ordering step, the wire harness producing device **103** places an order on the basis of the bill of materials created in step **S35.** Note that the bill of materials may be retrieved by the wire harness producing device **103** directly from the wire harness designing device **1,** or may be retrieved by the wire harness producing device **103** through the data server device **104** from the wire harness designing device **1.** Further, the materials ordering step may be executed by the wire harness designing device **1.**

After that, in step **S5,** a wire harness producing step is executed. In the wire harness producing step, with the wire harness producing device **103,** the full-scale two-dimensional drawings **113** are displayed on the plurality of display devices **124** of the work bench **123,** and the electric wires **11** in turn are laid out on the full-scale two-dimensional drawings **113,** to produce each of the sub harnesses **10**b. Each of the produced sub harnesses **10**b is transported to the vehicle manufacturer. Further, the wire harness producing device **103** retrieves the times taken to produce each of the sub harnesses **10b** as the production time data **114,** and transmits them to the data server device **104.**

After that, in step **S6,** a wire harness wiring step is executed. In the wire harness wiring step, the operator uses the wiring supporting device **102** to wire each of the sub harnesses **10b** to the train vehicle. The wiring supporting device **102** retrieves the times taken to wire each of the sub harnesses **10b** as the wiring time data **115,** and transmits them to the data server device **104.**

### (Actions and advantageous effects of the embodiment)

As described above, the wire harness designing device **1** according to the embodiment is configured in such a manner as to include the extraction section **3,** which is configured to look up the track record database **112** on the basis of the structure data for the wire harness **10** to be designed input in the input section **2,** and extract the plurality of existing wire harnesses **10** each having a structure close to the structure of the wire harness **10** to be designed, and the presentation section **4,** which is configured to be able to present the plurality of existing wire harnesses **10** extracted by the extraction section **3** in an order of the total production times or the total wiring times for the plurality of existing wire harnesses **10,** and which is configured to be able to present the respective structures of the sub harnesses **10b** in the selected wire harness **10.**

By configuring the presentation section **4** to be able to present the plurality of existing wire harnesses **10** extracted by the extraction section **3** in an order of the total production times, it is possible to easily know the respective structures of the sub harnesses **10b** (the combinations of the electric wires **11)** that shorten the total production time for the wire harness **10,** and it is therefore possible to lower the producing cost for the wire harness **10** and simplify the designing operation for the wire harness **10.** That is, according to the present embodiment, it is possible to achieve the wire harness designing device 1, which is able to efficiently design the wire harness **10** lowered in the producing cost therefor.

Further, when the designer empirically makes the dividing design for the sub harnesses **10b** as in the conventional case, a variation in the design quality depending on the designer occurs, leading to concern that a wasteful producing cost may be incurred, but, as in the present embodiment, by allowing for the track records of the plurality of existing wire harnesses **10,** it is possible to keep the design quality constant and stably lower the producing cost for the wire harness **10.**

By configuring the presentation section **4** to be able to present the plurality of existing wire harnesses **10** extracted by the extraction section **3** in an order of the total wiring times, it is possible to easily know the respective structures of the sub harnesses **10b** (the combinations of the electric wires **11)** that shorten the total wiring time for the wire harness **10,** and it is therefore possible to simplify the designing operation for the wire harness **10.** That is, according to the present embodiment, it is possible to achieve the wire harness designing device **1,** which is able to efficiently design the wire harness **10** improved in the wiring efficiency for the wire harness **10** to the vehicle main body.

Further, when the designer empirically makes the dividing design for the sub harnesses **10b** as in the conventional case, a variation in the design quality depending on the designer occurs, leading to concern that the efficiency for wiring the wire harness **10** to the vehicle main body may be lowered, but, as in the present embodiment, by allowing for the track records of the plurality of existing wire harnesses **10,** it is possible to keep the design quality constant and stably enhance the efficiency for wiring the wire harness **10** to the vehicle main body.

### (Summary of the embodiment)

Next, the technical ideas grasped from the embodiments will be described with the aid of the reference characters and the like in the embodiments. It should be noted, however, that each of the reference characters and the like in the following descriptions is not to be construed as limiting the constituent elements in the appended claims to the members and the like specifically shown in the embodiments.
**[1]** A wire harness designing device **(1),** which is used to make a design of a wire harness **(10)** with a plurality of electric wires **(11)** bundled together on the basis of a wiring layout for the plurality of electric wires **(11),** the device **(1)** comprising: a track record database **(112)** including structure data for existing wire harnesses **(10),** and configured to be able to identify at least a total time of production of each of the existing wire harnesses **(10)** or a total time of wiring of each of the existing wire harnesses **(10),** and a structure of each of sub harnesses (**10**b) resulting from dividing the wire harness **(10);** an input section **(2)** configured to be fed with specification data including structure data for the wire harness **(10)** to be designed on the basis of the wiring layout for the plurality of electric wires **(11);** an extraction section **(3)** configured to look up the track record database **(112)** on the basis of the structure data input in the input section **(2),** and extract the existing wire harnesses (**10**) each having a structure close to a structure of the wire harness **(10)** to be designed; and a presentation section **(4)** configured to be able to present the existing wire harnesses **(10)** extracted by the extraction section **(3)** in an order of the respective total times of production of the existing wire harnesses **(10),** or in an order of the respective total times of wiring of the existing wire harnesses **(10),** and configured to be able to present the structures of the sub harnesses (**10**b).
**[2]** The wire harness designing device **(1)** as defined in the above **[1],** wherein the track record database **(112)** is configured in such a manner as to include a weight of each of the sub harnesses (**10**b), while the presentation section **(4)** is configured to be able to present at least a weight of heaviest ones of the sub harnesses (**10**b).
**[3]** The wire harness designing device **(1)** as defined in the above **[1]** or **[2],** wherein the track record database **(112)** is configured in such a manner as to include a weight of each of the sub harnesses (**10**b), while the extraction section **(3)** is configured to be able to set an upper limit value for the respective weights of the sub harnesses (**10**b) as an extraction condition.
**[4]** The wire harness designing device **(1)** as defined in any one of the above **[1]** to **[3],** wherein the track record database **(112)** is configured in such a manner as to include the respective total times of production of the existing wire harnesses **(10),** while the extraction section **(3)** is configured to be able to set an upper limit value for the respective total production times of the existing wire harnesses **(10)** as an extraction condition.
**[5]** The wire harness designing device **(1)** as defined in any one of the above **[1]** to **[4],** wherein the track record database **(112)** is configured in such a manner as to include the respective total production times and the respective total wiring times of the existing wire harnesses **(10),** while the presenting section **(4)** is configured to be able to present the existing wire harnesses **(10)** extracted by the extraction section **(3)** in an order of total times of the respective total production times and the respective total wiring times of the existing wire harnesses **(10).**
**[6]** The wire harness designing device **(1)** as defined in any one of the above **[1]** to **[5],** wherein the wiring layout for the plurality of electric wires **(11)** is three-dimensional data, and the input section **(2)** is configured to be able to extract the structure data for the wire harness **(10)** to be designed from the input three-dimensional data.
**[7]** The wire harness designing device **(1)** as defined in any one of the above **[1]** to **[6],** further comprising a two-dimensional drawing creation section configured to create respective two-dimensional drawings **(113)** of the sub harnesses (**10**b) for the existing wire harness **(10)** to be designed, on the basis of the structure data for the wire harness **(10)** to be designed input in the input section **(2)** and the structure data for the sub harnesses (**10**b) in the existing wire harness **(10)** presented and selected in the presentation section **(4).**
**[8]** The wire harness designing device **(1)** as defined in any one of the above **[1]** to **[7],** wherein the track record database **(112)** is configured to be able to identify the respective two-dimensional drawings **(113)** of the sub harnesses (**10**b) for the existing wire harness **(10),** while the presenting section **(4)** is configured to be able to present the respective two-dimensional drawings **(113)** of the sub harnesses (**10**b) for the existing wire harness **(10).**
**[9]** A wire harness designing method, which is used to make a design of a wire harness **(10)** with a plurality of electric wires **(11)** bundled together on the basis of a wiring layout for the plurality of electric wires **(11),** the method comprising: preparing a track record database **(112)** including structure data for existing wire harnesses **(10),** and configured to be able to identify at least a total time of production of each of the existing wire harnesses **(10)** or a total time of wiring of each of the existing wire harnesses **(10),** and a structure of each of sub harnesses (**10**b) resulting from dividing the wire harness **(10);** inputting specification data including structure data for the wire harness **(10)** to be designed to an input section **(2)** on the basis of the wiring layout for the plurality of electric wires **(11);** looking up the track record database **(112)** on the basis of the structure data input in the input section **(2),** and extracting the existing wire harnesses (**10**) each having a structure close to a structure of the wire harness **(10)** to be designed; and presenting the extracted existing wire harnesses **(10)** in an order of the respective total times of production of the existing wire harnesses **(10),** or in an order of the respective total times of wiring of the existing wire harnesses **(10),** and making it possible to present the structures of the sub harnesses (**10**b).

Although the embodiments of the present invention have been described above, the above embodiments are not to be construed as limiting the inventions according to the appended claims. Further, it should be noted that not all the combinations of the features described in the embodiments are indispensable to the means for solving the problem of the invention. Still further, the present invention can be appropriately modified and implemented without departing from the spirit thereof.

Although the invention has been described with respect to the specific embodiments for complete and clear disclosure, the appended claims are not to be thus limited but are to be construed as embodying all modifications and alternative constructions that may occur to one skilled in the art which fairly fall within the basic teaching herein set forth.

## Claims

1. A wire harness designing device, which is used to make a design of a wire harness with a plurality of electric wires bundled together on the basis of a wiring layout for the plurality of electric wires, the device comprising:
a track record database including structure data for existing wire harnesses, and configured to be able to identify at least a total time of production of each of the existing wire harnesses or a total time of wiring of each of the existing wire harnesses, and a structure of each of sub harnesses resulting from dividing the wire harness;
an input section configured to be fed with specification data including structure data for the wire harness to be designed on the basis of the wiring layout for the plurality of electric wires;
an extraction section configured to look up the track record database on the basis of the structure data input in the input section, and extract the existing wire harnesses each having a structure close to a structure of the wire harness to be designed; and
a presentation section configured to be able to present the existing wire harnesses extracted by the extraction section in an order of the respective total times of production of the existing wire harnesses, or in an order of the respective total times of wiring of the existing wire harnesses, and configured to be able to present the structures of the sub harnesses.

2. The wire harness designing device according to claim **1,** wherein the track record database is configured in such a manner as to include a weight of each of the sub harnesses, while the presentation section is configured to be able to present at least a weight of heaviest ones of the sub harnesses.

3. The wire harness designing device according to claim **1** or **2,** wherein the track record database is configured in such a manner as to include a weight of each of the sub harnesses, while the extraction section is configured to be able to set an upper limit value for the respective weights of the sub harnesses as an extraction condition.

4. The wire harness designing device according to any one of claims **1** to **3,** wherein the track record database is configured in such a manner as to include the respective total times of production of the existing wire harnesses, while the extraction section is configured to be able to set an upper limit value for the respective total production times of the existing wire harnesses as an extraction condition.

5. The wire harness designing device according to any one of claims **1** to **4,** wherein the track record database is configured in such a manner as to include the respective total production times and the respective total wiring times of the existing wire harnesses, while the presenting section is configured to be able to present the existing wire harnesses extracted by the extraction section in an order of total times of the respective total production times and the respective total wiring times of the existing wire harnesses.

6. The wire harness designing device according to any one of claims **1** to **5,** wherein the wiring layout for the plurality of electric wires is three-dimensional data, and the input section is configured to be able to extract the structure data for the wire harness to be designed from the input three-dimensional data.

7. The existing wire harness designing device according to any one of claims **1** to **6,** further comprising:
a two-dimensional drawing creation section configured to create respective two-dimensional drawings of the sub harnesses for the existing wire harness to be designed, on the basis of the structure data for the wire harness to be designed input in the input section and the structure data for the sub harnesses in the existing wire harness presented and selected in the presentation section.

8. The wire harness designing device according to any one of claims **1** to **7,** wherein the track record database is configured to be able to identify the respective two-dimensional drawings of the sub harnesses for the existing wire harness, while the presenting section is configured to be able to present the respective two-dimensional drawings of the sub harnesses for the existing wire harness.

9. A wire harness designing method, which is used to make a design of a wire harness with a plurality of electric wires bundled together on the basis of a wiring layout for the plurality of electric wires, the method comprising:
preparing a track record database including structure data for existing wire harnesses, and configured to be able to identify at least a total time of production of each of the existing wire harnesses or a total time of wiring of each of the existing wire harnesses, and a structure of each of sub harnesses resulting from dividing the wire harness;
inputting specification data including structure data for the wire harness to be designed to an input section on the basis of the wiring layout for the plurality of electric wires;
looking up the track record database on the basis of the structure data input in the input section, and extracting the existing wire harnesses each having a structure close to a structure of the wire harness to be designed; and
presenting the extracted existing wire harnesses in an order of the respective total times of production of the existing wire harnesses, or in an order of the respective total times of wiring of the existing wire harnesses, and making it possible to present the structures of the sub harnesses.
